# EUROPÄISCHE PATENTSCHRIFT

(11) **EP 0 594 665 B1**
(45) Veröffentlichungstag und Bekanntmachung des Hinweises auf die Patenterteilung: **28.02.1996**
(21) Anmeldenummer: 92914137.2
(22) Anmeldetag: 06.07.1992
(51) Int. Cl.: G11B 19/12, G11B 27/10, G11B 27/24, G11B 23/42, G11B 33/10

(54) **SYSTEM ZUR WIEDERGABEPROGRAMMIERUNG VON AUF EINEM AUFZEICHNUNGSTRÄGER GESPEICHERTEN AUFZEICHNUNGSBEITRÄGEN**
SYSTEM FOR PROGRAMMING THE PLAYBACK OF RECORDED ITEMS STORED ON A RECORDING SUBSTRATE
SYSTEME POUR LA PROGRAMMATION DE LA REPRODUCTION DE MORCEAUX ENREGISTRES SUR UN SUPPORT D'ENREGISTREMENT

(30) Priorität: 18.07.1991 DE 4123758; 25.09.1991 DE 4131884
(43) Veröffentlichungstag der Anmeldung: 04.05.1994
(73) Patentinhaber: Thomson Consumer Electronics Sales GmbH, D-30453 Hannover (DE)
(72) Erfinder: LENZ, Paul, D-3000 Hannover 1 (DE); KÜHN, Hans-Robert, D-7742 St. Georgen (DE)
(86) Internationale Anmeldenummer: EP9201516
(87) Internationale Veröffentlichungsnummer: WO9302450

(56) Entgegenhaltungen:
- EP-A- 0 224 465
- EP-A- 0 265 809
- DE-A- 2 102 876
- DE-A- 3 139 543
- DE-A- 3 818 502
- DE-A- 3 830 745
- DE-A- 3 842 149
- GB-A- 2 062 935
- GB-A- 2 232 805
- PATENT ABSTRACTS OF JAPAN vol. 7, no. 146 (P-206)25. Juni 1983
- PATENT ABSTRACTS OF JAPAN vol. 9, no. 113 (P-356)17. Mai 1985
- PATENT ABSTRACTS OF JAPAN vol. 11, no. 87 (P-557)17. M rz 1987
- PATENT ABSTRACTS OF JAPAN vol. 14, no. 283 (P-1063)19. Juni 1990
- PATENT ABSTRACTS OF JAPAN vol. 11, no. 134 (P-571)(2581) 28. April 1987
- PATENT ABSTRACTS OF JAPAN vol. 9, no. 79 (P-347)9. April 1984

## Beschreibung

Die Erfindung betrifft ein System zur Wiedergabeprogrammierung auf einem Aufzeichnungsträger gespeicherten Aufzeichnungsbeiträgen und/oder Informationen.

Bei der Wiedergabe von Musik-, Sprach- und/oder Videoinformationen oder -signalen; auch Textinformationen von einem bespielten Aufzeichnungsträger stellt sich immer wieder das Problem ein, daß der Benutzer nicht alle auf dem Aufzeichnungsträger gespeicherten Aufzeichnungsbeiträge oder Informationen, wie z.B. Musikvideos, Texte und sonstige Informationen hören und/oder sehen möchte, sondern nur eine begrenzte Anzahl oder nur individuell gewünschte Aufzeichnungsbeiträge oder Informationen. Dieses Wunschverhalten führt üblicherweise dazu, daß nach dem Abspielen eines Wunschtitels eventuell Aufzeichnungsbeiträge übersprungen werden müssen, bis der nächste Wunschtitel wiedergegeben werden kann.

Mit einer Wiedergabevorrichtung, z.B. einem CD-Player, der nach dem Einlegen der CD unter anderem die Zahl, Titelnummer und Sprungadresse eines einzelnen Aufzeichnungsbeitrags abspeichert, ist es möglich, mittels einer dem CD-Player zugeordneten Bedienungseinrichtung, z.B. Fernbedienung, nur die gewünschten Beiträge abzurufen. Dazu müssen entweder vor Beginn der gesamten Wiedergabe alle gewünschten Titelnummern der gewünschten Aufzeichnungsbeiträge eingegeben werden, oder nach dem Abspielen eines Aufzeichnungsbeitrages wird die Titelnummer des nächsten gewünschten Beitrages eingegeben.

Eine solche Wiedergabeprogrammierung ist jedoch relativ aufwendig, da der Benutzer nach jedem Einlegen einer CD oder nach dem Abspielen eines jeden Aufzeichnungsbetrages tätig werden muß, um die gewiinschte Titelangabe vorzunehmen. Ist ein CD-Player in der Lage, für mehrere CD die entsprechend gewünschten Titelnummern abzuspeichern, weiß der Benutzer nach einer gewissen Zeit nicht mehr, welche Wunschtitel von einer CD automatisch wiedergegeben werden. Dazu muß erst einmal die CD in den CD-Player eingelegt werden. Vor dem Einlegen der CD in den CD-Player ist ein Dritter überhaupt nicht in der Lage zu beurteilen, welche Titel bei der Wiedergabe automatisch selektiv abgespielt oder nicht wiedergegeben werden.

DE-A-3842149 zeigt eine Wiedergabeprogrammierung für eine CD, die einen optisch abtastbaren Bereich mit einer Startmarkierung und mit vorgegebenen manuell markierbaren Stellen hat. Dabei bilden jeweils mehrere entlang eines Radius liegende markierbare Stellen einen digitalen Kode für die Position eines Titels auf der Platte. Die Programmierung erfolgt auf einem Etikett. GB-A-2232805 zeigt die Möglichkeit, daß industriell zusätzlich aufgebrachte Strichmarkierungen, die den Inhalt des Aufzeichnungsträgers beschreiben, vom CD-Spieler gelesen und ausgewertet werden können.

Es ist eine Aufgabe der Erfindung, ein System zur benutzerseitigen Wiedergabeprogrammierung von Aufzeichnungsbeiträgen oder Informationen von einem Aufzeichnungsträger zu schaffen, welches eine einfache und übersichtliche Programmierung erlaubt. Eine weitere Aufgabe der Erfindung ist es, bisherige Aufzeichnungsträger z.B. Compact-Disks, die die Merkmale der Erfindung bislang nicht aufweisen, in das erfindungsgemäße Wiedergabeprogrammiersystem einzubinden, um sie auf einfache Weise nachzurüsten.

Die erste Aufgabe wird mit einem System zur Wiedergabeprogrammierung, welches die Merkmale nach Anspruch 1 aufweist, gelöst. In den weiteren Ansprüchen sind sehr vorteilhafte Ausgestaltungen einzelner Merkmale des Gesamtsystem beschrieben. Ein Aufzeichnungsträger nach der Erfindung ist in Anspruch 2 enthalten.

Aufzeichnungsträger, die einen solchen Bereich oder Tabelle nicht aufweisen, können mit einem haftfähigen Etikett oder Aufkleber nach Anspruch 6 nachgerüstet werden, wobei der Bereich auf dem Etikett oder Aufkleber die genannten Merkmale, wie vorstehend beschrieben, aufweist.

Der erfindungsgemäße Aufzeichnungsträger ist sehr einfach zu programmieren, die Wertmarkierungstabelle auf dem Aufzeichnungsträger ist fest und vorzugsweise unlösbar mit diesem verbunden, die Programmierung bzw. die Zuordnung einer Stelle des Bereiches zu einem Aufzeichnungsbeitrag oder Titel ist für jedermann übersichtlich, zumal auf einem Aufzeichnungsträger ohnehin häufig Informationen über die einzelnen Aufzeichnungsbeiträge angebracht sind. Außerdem bildet die Tabelle mit dem Aufzeichnungsträger eine vorteilhafte bauliche Einheit, so daß eine Programmierung immer unmißverständlich nur für einen Aufzeichnungsträger und die entsprechenden Aufzeichnungsbeiträge gelten kann und die Programmierung selbst für einen Benutzer auch jederzeit lesbar ist.

Vorzugsweise ist der Aufzeichnungsträger eine CD oder MOD (Magneto-Optische Disk), Foto-CD oder dergl., der eine Abtastseite und eine Labelseite aufweist, wobei der Bereich in Form der Tabelle auf der Labelseite oder Abtastseite angeordnet ist und jeder markierbaren Stelle eine Sprungadresse eines Aufzeichnungsbeitrages der CD oder MOD zugeordnet ist. Dabei stellt die Sprungadresse vorzugsweise die Startadresse eines Aufzeichnungsbeitrages dar. Vorzugsweise werden bei der Wiedergabeprogrammierung die Werte zu unerwünschten Aufzeichnungsbeiträgen markiert (negative Selektion). Es ist auch möglich, durch verschiedene Markierungsarten, wie z.B. Strich-, Balken-, Kreis-, Alphanumerik-Markierungen usw., an einer Stelle, eine unterschiedliche Steuerung von Wiedergabeparametern wie Lautstärke, Klang, Dynamik usw. zu erreichen. Dazu kann es zweckmäßig sein, wenn der markierbare Bereich zusätzliche, nicht einem bestimmten Aufzeichnungsbeitrag zugeordnete, markierbare Stellen aufweist. Wird eine solche markiert, kann damit bei der Wiedergabe von Musiksignalen z.B. die Lautstärke oder Dynamik auf einen vorbestimmten Wert begrenzt werden. Durch die zusätzlichen Stellen oder zusätzlichen Markierungsarten wird eine individuelle Wiedergabeprogrammierung der Aufzeichnungsbeiträge unterstützt.

Vorzugsweise sind die Markierungen der Stellen in dem Bereich löschbar, so daß eine einfache Umprogrammierung durchgeführt werden kann. Außerdem ist es zweckmäßig, die Zahl der möglichen Markierungen bzw. Stellen in dem Bereich der Titelzahl auf dem Aufzeichnungsträger anzupassen.

Ein Verfahren zur Steuerung einer Wiedergabevorrichtung mit einer Aufnahmevorrichtung für einen erfindungsgemäßen Aufzeichnungsträger ist in Anspruch 7 enthalten.

Vorzugsweise werden an der Wiedergabevorrichtung die markierten und/oder unmarkierten Werte optisch und/oder akustisch angezeigt, sodaß der Benutzer, nachdem er den Aufzeichnungsträger in oder auf die Wiedergabevorrichtung gelegt hat, ständig darüber informiert ist, welche Aufzeichnungsbeiträge nacheinander oder gemäß einer Selektionsreihenfolge wiedergegeben werden.

Da der Aufzeichnungsträger wie eine CD, MOD oder Schallplatte kreisförmig ausgebildet ist, wird die Tabelle beim Rotieren des Aufzeichnungsträgers abgetastet. Die Leseeinrichtung für den abtastbaren Bereich kann somit feststehend in der Wiedergabevorrichtung angeordnet werden, wenn der Bereich auf der Labelseite angeordnet ist.

Vorzugsweise weist der Aufzeichnungsträger während des Abtastvorgangs für die Tabelle eine gleichbleibende Rotationsgeschwindigkeit auf. Insbesondere in dem Bereich des Bereiches oder der Tabelle, in dem die Stellen markiert werden können, sollte der Bereich gleich große Markierungsstellen oder -felder aufweisen, um bei gleichbleibender Rotationsgeschwindigkeit beim Abtasten einen möglichst fehlersicheren Lesevorgang des abtastbaren Bereichs zu gewährleisten.

Sehr vorteilhaft läßt sich das Verfahren auch zum Steuern einer als automatischen Wechslervorrichtung ausgebildeten Wiedergabevorrichtung mit einem Steuersystem verwenden, wobei das Steuersystem das sukzessive und/oder selektive Abspielen einer Vielzahl von Aufzeichnungsträgern ermöglicht, unter Verwendung eines Aufzeichnungsträgers wie vorstehend beschrieben und unter Verwendung einer Leseeinrichtung in der Wechsler - oder Wiedergabevorrichtung, wobei die Leseeinrichtung die örtliche Lage der markierten und/oder unmarkierten Werte liest und in einem Speicher in der Wechslervorrichtung einliest. Zunächst wird das Abspielen eines ersten Aufzeichnungsträgers gestartet, und die einem Wert zugeordneten bzw. gewünschten Aufzeichnungsbeiträge werden wiedergegeben. Der erste Aufzeichnungsträger wird gegen einen zweiten Aufzeichnungsträger ausgewechselt, wenn die gewünschten Aufzeichnungsbeiträge von dem ersten Aufzeichnungsträger abgespielt sind. Die Verfahrensschritte des Startens und Wechsels werden wiederholt, bis alle oder eine Auswahl von mehreren Aufzeichnungsträgern abgespielt wurde.

Aus EP 0224465 ist ein Verfahren zum Steuern einer automatischen Wechslervorrichtung mit einem Steuersystem bekannt, das das sukzessive und/oder selektive Abspielen einer Vielzahl von Aufzeichnungsträgern ermöglicht, wobei der Benutzer jedoch einmal für alle Aufzeichnungsträger eine Gesamtzahl der wiederzugebenden Aufzeichnungsbeiträge eingibt. Dieses Verfahren ist unflexibel, benötigt einen erheblichen Schaltungsaufwand in der Wechslervorrichtung und ist zudem sehr umständlich und nicht individuell zu programmieren.

Anspruch 12 enthält eine erfindungsgemäße Wiedergabevorrichtung für das System nach Anspruch 1.

Ist in die Wiedergabevorrichtung ein CD-Spieler oder ein MOD-Spieler, der einen optischen Abtaster zur Abtastung der Audio- und/oder Videoinformationen von der Abtastseite, das ist die Seite des Aufzeichnungsträgers, auf der die abzutastenden Audio- und/oder Videoinformationen aufgebracht sind, kann es sinnvoll sein, eine separate Leseeinrichtung auf der dem Label der MOD oder CD zugewandten Seite anzuordnen, wenn der Bereich auf der Labelseite angeordnet ist. Das heißt, das die separate Leseeinrichtung vorzugsweise auf der gegenüberliegenden Seite des optischen Abtasters zur Abtastung der Audio- und/oder Informationen im CD-Spieler oder MOD-Spieler angeordnet ist.

Allerdings ist ein Lesen bzw. Abtasten des Bereiches auf der Label- oder Abtastseite auch mit dem Audio-Abtaster möglich, wenn der Reflektionsgrad der MOD oder CD für Lichtstrahlen vom Audio-Abtaster geringer als 100% ist, so daß die Lichtstrahlen die MOD oder CD durchdringen können. Dazu ist es vorteilhaft, den Gehäuseteil der Wiedergabevorrichtung, der der Labelseite der MOD oder CD zugeordnet ist, mit einer sehr hellen oder stark reflektierenden Fläche auszubilden, um die Kontrastfähigkeit zu erhöhen.

Vorzugsweise werden nach dem Abtasten der markierten und/oder unmarkierten Stellen die Werte dafür oder die den Aufzeichnungsbeiträgen zugeordneten Bezugszeichen wie z.B. Aufzeichnungsbeitragsnummer, Titelnummer, Titelbezeichnung wie Musikstückbeschriftung, Name des Interpreten, Ort und Zeit der Aufnahme usw. an einem Display der Wiedergabevorrichtung angezeigt.

Nachfolgend wird die Erfindung anhand eines möglichen Ausführungsbeispiels in Zeichnungen näher erläutert. In der Zeichnung stellen dar:
- Fig. 1a: eine Ausbildung eines erfindungsgemäßen Aufzeichnungsträgers CD;
- Fig. 1b: eine alternative Ausbildung des Bereichs zu Fig. 1a;
- Fig. 1c: eine Abbildung eines auf eine CD aufklebbaren Etiketts mit der Tabelle nach Fig. 1a;
- Fig. 1d: eine alternative Ausführungsform zu Fig. 1c;
- Fig. 2: ein Schaltbild eines Teils eines CD - Spielers;
- Fig. 3: ein Programmablaufplan des Systems zur Wiedergabeprogrammierung von Aufzeichnungsbeiträgen bei einer CD-Wechslervorrichtung;
- Fig. 4: ein Gesamt-Blockschaltbild eines CD - Spielers;
- Fig. 5: eine Aufsicht einer aufgeklappten Hartbox (Schutzhülle) zur Zentrierung eines Etiketts auf der Labelseite einer CD.

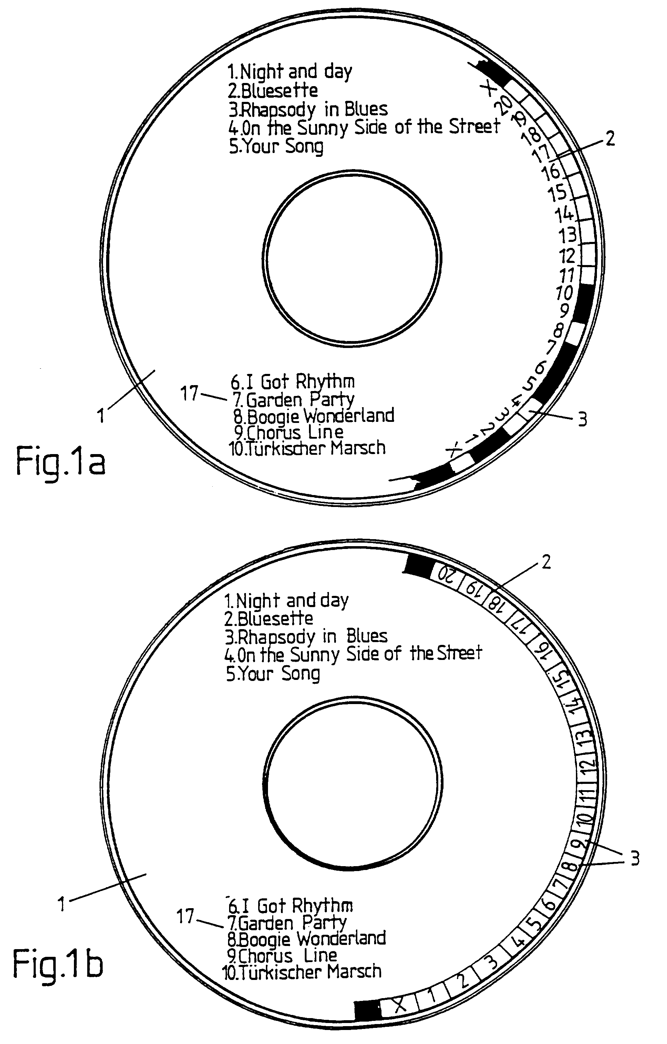

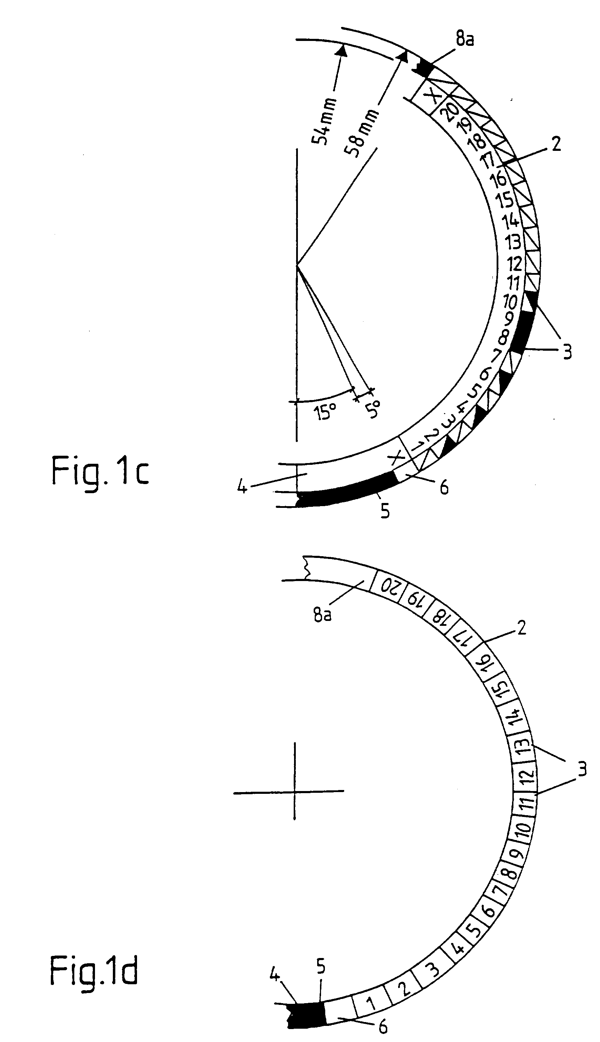

Fig. 1a zeigt die Labelseite einer Compakt-Disc 1, auf der eine abtastbare Tabelle bzw. Bereich 2 angeordnet ist, in welcher abtastbare Markierungen an örtliche vorbestimmten Feldern bzw. Stellen 3 selektiv und manuell vorgenommen werden können. Der Bereich bildet mit den Markierungen einen optisch abtastbaren Code. Den ersten zehn Stellen eins - zehn ist jeweils eine bestimmte Titelnummer 17 auf der CD zugeordnet. Die Stellen elf - zwanzig sind unbesetzt. Der Bereich ist auf der Labelseite der CD aufgedruckt oder haftet als spezielles Etikett 4 auf der CD. Die Form des Bereichs bzw. des Etiketts ist ein 1/3 Kreis von etwa 4mm Breite für die Markierungsstellen mit einer Numerierung der Zahlen eins - zwanzig neben den Feldern 3 (Fig. 1a, Fig. 1c) als den Titelnummern zugeordnete Kennung neben den Stellen.

Unter Umständen ist eine solcher Bereich bzw. Etikett zu breit, so daß die Beschriftung am Außenrand auf der Labelseite der CD beim Aufkleben des Etiketts 4 verdeckt werden kann. Gemäß der Variante nach Fig. 1b oder Fig. 1d weist der Bereich nur die Breite der Markierungsstellen auf, die ihrerseits numeriert sind, sodaß der Bereich schmaler als in Fig. 1a und Fig. 1c ausgebildet ist. Es ist jedoch für den Benutzer wichtig, daß die wichtigen Informationen, die auf der CD-Labelseite abgedruckt sind, wie z.B. das Inhaltsverzeichnis 17, von dem Bereich 2 oder dem Etikett nicht verdeckt werden und damit nach wie vor zugänglich sind, um eine leichte Zuordnung der Titel und des markierbaren Bereichs jederzeit auch ohne ein Beiheft zu gewährleisten.

Gewöhnlich ist der äußere Rand der CD auf der Labelseite aber nicht mit einer für das allgemeine Verständnis des Benutzers wesentlichen Beschriftung ausgefüllt, so daß dort der abtastbare Bereich ohne weiteres und sehr vorteilhaft untergebracht werden kann, weil dort der relativ größte Platz für den schmalen Bereich 2 vorhanden ist.

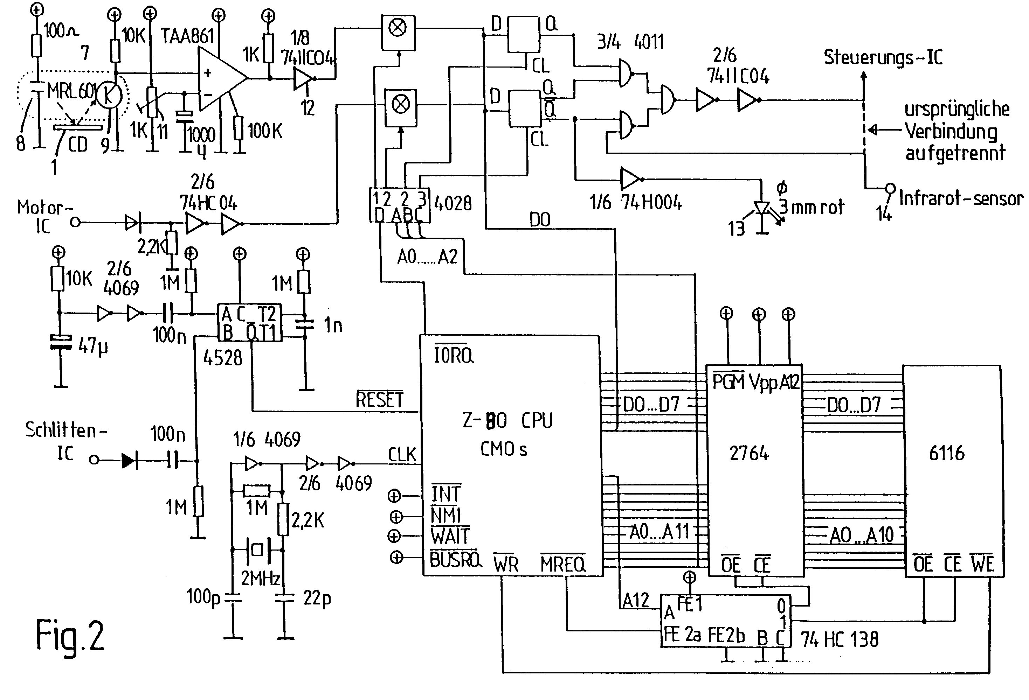

Die Markierungen beginnen mit einer schwarzen und einer weißen Zone 5 und 6, die zur Synchronisierung einer Abtastschaltung 7 (Fig. 2) in der Wiedergabevorrichtung dienen. Darauf folgen die zwanzig Markierungsstellen 3, auf denen man zwanzig nicht gewünschte Musiktitel 17 kennzeichnen kann, indem man die betreffende Stelle schwarz ausmalt oder ausfüllt. Der ersten Stelle ist der erste Titel 17.1 zugeordnet, der zweiten Stelle der zweite Titel usw.. An die Markierungsstellen schließt sich in Drehrichtung noch ein schwarzes Synchronisationsfeld 8a an.

Weist die CD wie in Fig. 1a nur zehn Musiktitel auf, ist auch nur die Markierung von Titeln eins bis zehn sinnvoll. Es ist daher einfacher, wenn die markierbare Stellenanzahl bei einer CD genau der Anzahl der Musiktitel entspricht. Bei einer MOD sollte die Stellenzahl allerdings nicht so stark eingegrenzt werden, da vor einer Aufnahme einer Gesamt-MOD die Anzahl der Aufzeichnungsbeiträge meistens noch unbestimmt ist.

Gemäß Fig. 1c hat die weiße Zone der Markierungsstellen 3 in dem Bereich 2 eine Länge von 5° (bezogen auf den Mittelpunkt der CD), was einer Länge von etwa 5mm entspricht. Für diese Länge sind entsprechend angepaßte Warteschleifen in der Auswertungsschaltung bzw. Auswertungsprogramm des Mikroprozessorsystems (Fig. 2) vorhanden. Eine wie vorstehend beschriebene Bereichsanordnung ist sehr vorteilhaft für eine Abtastung bei in etwa gleichbleibender Rotationsgeschwindigkeit des Aufzeichnungsträgers.

Die zuverlässigste Funktion der Abtastschaltung 7 wurde mit Etiketten 4 aus weißen Papier erzielt, wobei die Markierungen mit einem schwarzen Filzstift erfolgten. Bei der Markierung ist dabei zu achten, daß der Kontrast der weißen und schwarzen Stellen groß genug ist. Unter Umständen ist hierzu ein spezieller Filzstift mit einer speziellen, infrarot absorbierenden Farbe notwendig, wenn als Leseeinrichtung für die markierbaren Stellen eine Infrarot-Reflex-Lichtschranke verwendet wird. Es sollte beim Aufbringen des Etiketts wie auch beim Markieren darauf geachtet, daß die empfindliche Labelseite der CD nicht von Kratzern, Weichmachern im Klebstoff des Etiketts oder in der Schreibflüssigkeit eines Markiestiftes beschädigt wird.

Eine weitere Möglichkeit zur Kontrastherstellung sind vormagnetisierte Scheiben von der Größe einer Markierungsstelle. Diese werden zur Markierung einer Stelle auf dem Bereich fest aufgebracht und können mit einem magnetischen Abtaster als Leseeinrichtung im CD-Spieler gelesen werden. Bei der Art und Weise der Markierung oder Beschriftung der Stellen 3 im Bereich gibt keine Einschränkungen, solange für die Leseeinrichtung 41 oder 601 noch ein genügender abtastbarer Kontrast vorhanden ist.

Wird der Bereich 2 bereits bei der CD Herstellung auf das reflektierende Material aufgedrückt, oder die Etiketten haben eine metallisch-reflektierende Oberfläche ist der notwendige Kontrast leichter zu erreichen. Dann kann es schon genügen, wenn die einzelnen Markierungsfelder 3 mit einer gut deckenden kontrastmittel, vorzugsweise schnell trocknende Farbe markiert werden. Außerdem kann die Zahl der Markierungsfelder bei der Herstellung an die Titelanzahl der CD angepaßt werden.

Eine Möglichkeit zur qualitativ verbesserten Wiedergabe von gewünschten Aufzeichnungsbeiträgen läßt sich mittels der Markierung bestimmter Felder erreichen. Dazu erhalten die markierbaren Felder (3) gemäß Fig. 1c im Bereich 2 jeweils einen Unterteilungsstrich z.B. in der Mitte oder entlang der Diagonalen eines markierbaren Feldes. Vom Benutzer wird ein Feld nur bis zur Hälfte markiert, wenn nach seiner Meinung dieser Musiktitel z.B. durch einen Kratzer gestört wiedergegeben wird. Das Abtasten und Erkennen von verschiedenen Markierungsformen ist für ein Lesegerät unproblematisch. Im Abspielgerät wird dann für den so markierten Titel eine Gegenmaßnahme vorgenommen, d.h. die Fehlerkorrekturschalttung ist von vornherein für das Auftreten von Fehler sensibilitiert. Häufig muß bei der Wiedergabe von mit Kratzern gestörten Aufzeichnungsbeiträgen bei der sogenannten Tracking-Regelkreisverstärkung ein Kompromiß gemacht werden und zwar um bei kurzen Stößen von außen (Schockeinfluß) noch nicht aus der Regelung der CD zu kommen, soll die Tracking-Verstärkung groß genug sein. Bei Vorliegen von Kratzern dagegen klein. Das Abspielgerät arbeitet gemäß diesem Vorschlag immer normal in Kompromiß-Stellung, wenn keine Feld-Hälfte markiert ist, verzichtet jedoch auf die Kompromiß-Schockunempfänglichkeit für die Aufzeichnungsbeiträge, die entsprechend zu Hälfte gekennzeichnet sind, weil dort Kratzer oder andere Störungen einen ungünstigen Einfluß ausüben würden, wenn der Kompromiß aufrechterhalten bleibt. Dadurch stellt sich der Vorteil ein, daß Benutzer eine verkratzte Stelle eines Aufzeichnungsbeitrages mit großer Wahrscheinlichkeit ohne Störungen wiedergeben kann.

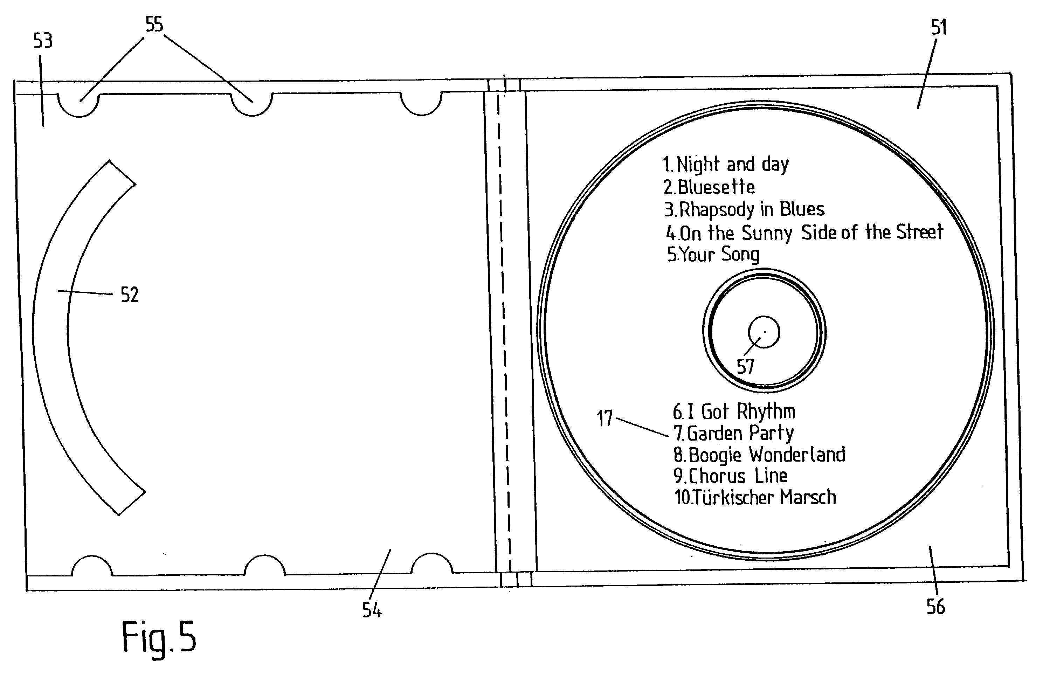

Zum Schutz gegen Schäden wird bekanntlich eine CD 1 regelmäßig in eine aufklappbaren Hartbox 51 (Fig. 5) gelegt und dort in einer Halterung 57 in einer definierten Lage arretiert. Die Hartbox eignet sich sehr gut zum exakten Aufbringen eines Etiketts 52 nach Fig. 1c oder Fig. 1d, wenn das Etikett ein heraustrennbarer Teil eines Blattes 53 ist, weiches in Fig. 5 in der linken Klappe 54 eingelegt ist. Üblicherweise wird dort ein Heft oder Informationsblatt mit Angaben über die CD lösbar zwischen Führungen eingelegt. Da die Ausmaße und Abmaße der CD in der Hartbox fest definiert sind, kann mit einem Blatt in der linken Klappe in Fig. 5, welches das Etikett (dem Betrachter ist die Rückseite des Etiketts zugewandt) an der geeigneten Stellen aufweist, eine sehr genaue und leicht handhabbare und exakte Anordnung des Etiketts beim Schließen der Hartbox durchgeführt werden. Das Etikett bleibt nach dem Zusammenklappen der Hartbox an der vorgesehenen Stelle der Labelseite der CD haften und kann leicht von dem Blatt in der linken Klappe gelöst werden.

In zunehmenden Maße werden CD's und MOD's in einer Cartrigde (feste Schutzhülle) angeordnet und auch in der Cartrigde liegend abgespielt werden. Zu diesem Zweck wird nach Einbringen der Cartrigde ein Schlitz an der Abtastseite freigegeben, durch den der Laser-Abtaster Zugang zur Platte bekommt. Gemäß vorliegender Erfindung wird die Cartrigde an der Labelseite im Abschnitt der Markierungen ebenfalls zugänglich gemacht werden, wenn ein gesonderter Markierungs-Abtaster verwendet wird. Diese Öffnung der Cartrigde an der Labelseite des Aufzeichnungsträgers entspricht im wesentlichen der Größe eines Markierungsfeldes. Soll der Bereich mittels des Laser-Abtasters abgetastet werden, ist es sinnvoll, die der Labelseite zugewandte Cartrigde-Innenseite sehr hell bzw. mit einer stark reflektierenden Schicht zu versehen, um Lichtstrahlen des Audio-Abtasters in geeigneter Weise zu reflektieren bzw. für die Lichtstrahlen einen entsprechend großen Kontrast herzustellen.

Fig. 2 zeigt eine Abtastschaltung 7 mit einem Mikroprozessorsystem, um die markierten Stellen 3 in dem Bereich 2 von der CD 1 abzutasten und die abgetasteten Wert zu verarbeiten bzw. auszuwerten.

Für die Abtastung der Markierungen in dem Bereich 3 von der CD 1 wird eine Infrarot-Reflex-Lichtschranke vom Typ MRL601 als feststehende Leseeinrichtung verwendet. Sie besteht aus einer Infrarot-LED 8 und einem Fototransistor 9, die zusammen in einem Gehäuse integriert sind. Durch einen eingebauten Infrarotfilter entsteht eine hohe Fremdlichtsicherheit, sodaß die Schaltung sogar bei geöffnetem Gerät und bei normaler Arbeitsbeleuchtung überprüft und eingestellt werden kann. Dieses ist bei der Einstellung eines Prototyps sinnvoll.

Die Lichtschranke MRL601 hat einen sehr guten Wirkungsgrad im Abstand von 5 mm über der abzutastenden Fläche und ist daher in dieser Höhe über dem Außenrand (Ümfang) der in Endlage (Abspielposition) befindlichen CD 1 im CD-Spieler montiert.

Der Fototransistor ist mit dem nichtinvertierenden Eingang eines Operationsverstärkers vom Typ TAA861 verbunden, der Impulse des Fototransistors verstärkt. Hierzu ist ein Trimmpotentiometer 11 auf den richten Pegel eingestellt und mit dem invertierenden Eingang des Operationsverstärkers verbunden.

Die Einstellung läßt sich leicht mit Hilfe eines Zweikanal-Oszilloskops durchführen, mit dem man die Impulse am Kollektor des Fototransistors mit denen am Ausgang des Operationsverstärkers vergleicht.

Am Fototransistor werden starke Impulse erkannt, die durch geschwärzte Markierungsstellen entstehen, und schwache Impulse, die durch die dünnen Markierungslinien 10 zwischen den Markierungsfeldern hervorgerufen werden und diese voneinander trennen. Der Trimmer ist nun so eingestellt, daß die schwachen Impulse gerade nicht mehr durchgeschaltet werden, sondern nur die kräftigen Impulse.

Die kräftigen Impulse werden durch einen nachfolgenden Inverter 12 umgekehrt, so daß die hellen Flächen im Bereich 2 positive Impulse hervorrufen.

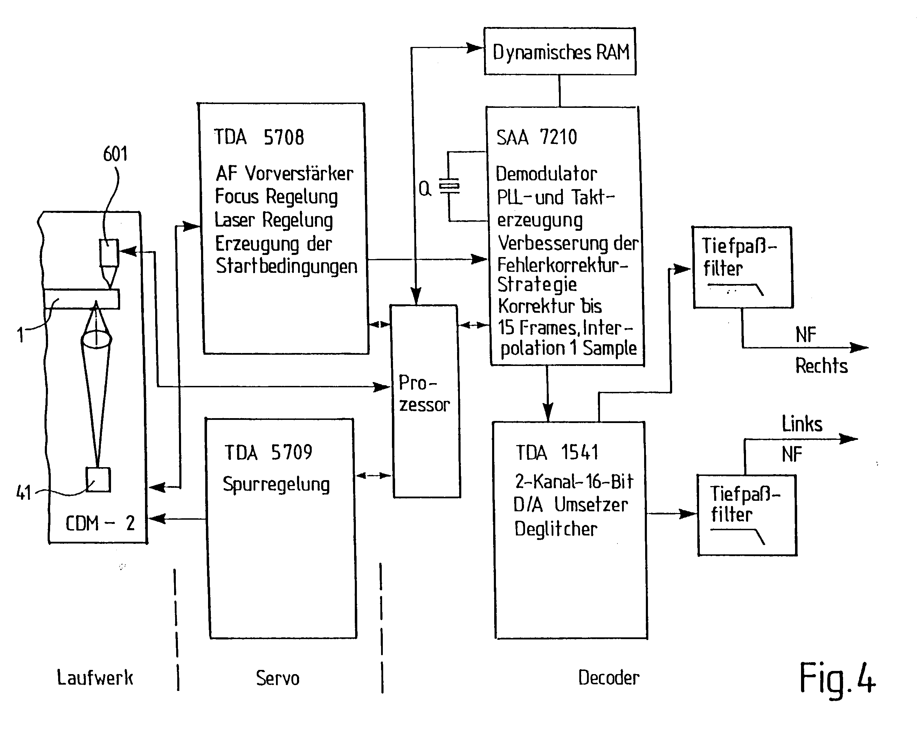

Zur Nachrüstung eines CD-Spielers PD-7500 konnte die gewünschte Programmierung mit der gezeigte Schaltung in Fig. 2 ohne Probleme erreicht werden. Dazu mußte nur die in Fig. 2 oben rechts gezeigte ursprüngliche Verbindung zwischen einem Steuerungs-IC (nicht dargestellt) und einem Infrarot-Sensor 14, der Befehlsignale von einer Fernbedienung erhält, aufgetrennt werden. Ein Gesamt-Blockschaldbild eines CD-Spielers 18 ist in Fig. 4 gezeigt. Das in Fig. 2 dargestellte als Datenverarbeitungseinheit ausgebildete Mikroprozessorsystem ist in dem eigentlichen Prozessor des CD-Spielers integriert, der die Abtastsignale von der Leseeinrichtung 601 verarbeitet.

Die Verarbeitung bzw. Auswertung (Fig. 2) der Impulse vom Inverter 12 und die weitere Steuerung erfolgt durch das in Fig. 2 dargestellte Mikroprozessorsystem, dessen Herz ein Prozessor Z-80 CPU ist. Die gesamte Schaltung ist (vom EPROM 2764 abgesehen) vollständig in CMOS-Technologie aufgebaut. Der Stromverbrauch ist so niedrig, daß die Versorgungsspannung direkt aus dem CD-Spieler entnommen werden kann.

Aus dem CD-Spieler werden noch zwei weitere Informationen bezogen: An einem IC (nicht dargestellt), das für die Bewegung des Schlittens zuständig ist, auf dem die CD in das Gerät eingezogen wird, wird ein Impuls abgezapft, aus dem Mikroprozessor ein RESET-Signal erhält. Ebenso bekommt der Mikroprozessor ein RESET-Signal, wenn der CD-Spieler eingeschaltet wird. Die Abtastschaltung beginnt also automatisch zu arbeiten, sobald der CD-Spieler eingeschaltet wird oder wenn eine neue CD durch den Schlitten eingezogen wird.

An einem anderen IC, das den Motor betreibt, der die CD rotieren läßt, werden Impulse abgezapft, die die Beschleunigung des Motors anzeigen. Bleiben diese Impulse aus, so ist dies ein Zeichen dafür, daß sich die CD mit einer konstanten Geschwindigkeit dreht. Erst dann werden die Markierungen der der Stellen ausgewertet. Dies geschieht gleich am Anfang, wenn der CD-Spieler die eingezogene oder eingelegte CD analysiert und unter anderem die Titelanzahl und Spieldauer feststellt. Dazu wird ein festes, unveränderliches Datenverzeichnis - TOC (Table Of Content) genannt- und die UTOC (User Table Of Content) der CD gelesen.

Nach der Analyse der Markierungen muß die Information an den CD-Spieler weitergegeben werden. Dies geschieht, indem der Mikroprozessor Z-80 die entsprechenden Steuerimpulse einer Infrarot-Fernbedienung simuliert. Deshalb ist die ursprüngliche Verbindung zwischen dem Infrarot-Sensor 14 und dem CD-Steuerungs-IC aufgetrennt. Zuvor schaltet der Mikroprozessor den Infrarot-Sensor des CD-Spielers ab, damit diese Simulation durch eine Fernbedienung nicht gestört werden kann. Dieser Zustand wird an der Frontseite des Gerätes durch das Aufleuchten einer Leuchtdiode 13 deutlich gemacht.

Zuerst sendet der Prozessor Z-80 das Signal für "Programmierung", dann die Nummern der unmarkierten Titel und anschließend das Signal für "Play", um die Musikwiedergabe zu starten. Zuletzt wird der Infrarot-Sender wieder eingeschaltet, worauf die Leuchtdiode 13 erlischt. Dann geht das dargestellte Programmiersystem in den Halt-Zustand über, den es nur durch einen erneuten RESET-Signal verlassen kann. Die Wiedergabe der gewünschten Titel kann beginnen. Dieser Halt-Zustand wird übrigens sofort eingenommen, wenn das System am Fehlen der schwarzen Synchronisationszone feststellt hat, daß die CD keinen abtastbaren Bereich 2 oder keine Markierungen in den Stellen 3 hat.

Der CD-Spieler zeigt nun an einem Display entweder die markierten oder unmarkierten Titelnummern an. Da die markierten Stellen verabredungsgemäß den unerwünschten Titeln zugeordnet sind, ist die Anzeige der Titelnummern sinnvoll, die auch wiedergegeben werden, also der Nummern der Stellen, die nicht markiert sind mit Ausnahme der Stellen elf - zwanzig. Der CD-Spieler fängt nun an, die den unmarkierten Stellen zugeordneten Titel nacheinander wiederzugeben. Sind wie in Fig. 1a beispielsweise die Felder 1, 2, 5. 6, 7, 9 und 10 markiert, so werden die Musikstücke 3, 4 und 8 automatisch wiedergegeben. Automatisch und ohne Verzögerungszeit wird nach dem Einzug der CD in den CD-Spieler mit der Widergabe des dritten Titels begonnen. Ebenso ist der zeitliche Sprung von Titel drei nach Titel acht in etwa genauso groß wie der Sprung von Titel drei nach vier. Die Verzögerungszeiten beim Sprung vom Titel vier nach acht sind daher sehr gering.

Das in Fig. 4 dargestellte Gesamt-Blockschaltbild eines CD-Spielers 18 zeigt die der Labelseite der CD 1 zugewandte Leseeinrichtung 601 und den der Abtastseite der CD 1 zugewandten Abtast-Laser 41 in der CD-Aufnahmevorrichtung 19 im CD-Spieler. Die Leseeinrichtung 601 wird von einem Prozessor gesteuert, und die markierten oder unmarkierten Werte werden in einen dynamischen Speicher (RAM) eingelesen.

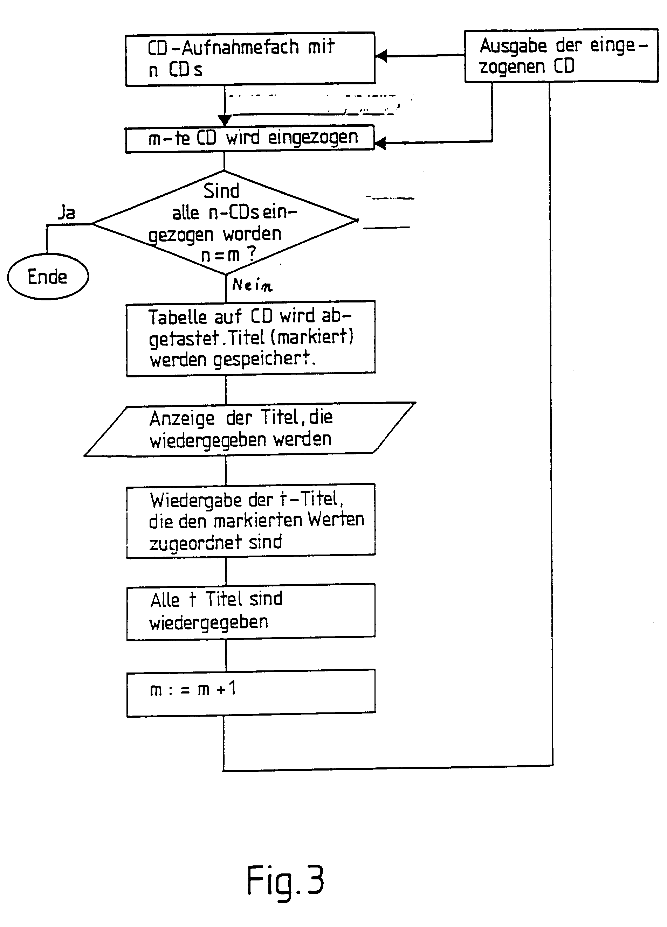

Fig. 3 zeigt einen Flußdiagramm eines als CD - Wechslervorrichtung ausgebildeten CD - Players. Die Wechslervorrichtung weist eine als Aufnahmefach ausgebildete Aufnahmevorrichtung für eine Anzahl n CD auf. Ein Steuersystem erlaubt bei solchen Wechslervorrichtungen das sukzessive und/oder selektive Abspielen der in dem Aufnahmefach liegenden Aufzeichnungsträger.

Zunächst wird eine erste CD über einen Schlitten in die Abspielpostion gezogen. Wie vorstehend beschrieben wird der Bereich von der Labelseite abgetastet, und die vom Benutzer ausgewählten Musiktitel werden wie vorstehen beschrieben wiedergegeben. Die erste CD wird gegen eine zweite im Aufnahmefach abgelegte CD ausgewechselt, wenn die den markierten oder unmarkierten Stellen zugeordneten Aufzeichnungsbeiträge von der ersten CD abgespielt sind. Diese Verfahrenschritte des Einziehens, Lesens, Wiedergebens und Wechselns wiederholen sich so lange, bis alle oder eine Auswahl der im Aufnahmefach abgelegten CD abgespielt wurde.

## Patentansprüche

1. System zur automatischen Selektion von Aufzeichnungen aus einer Vielzahl von auf einem drehbaren, plattenförmigen Aufzeichnungsträger (1) gespeicherten Aufzeichnungen (17) zwecks Wiedergabe, wobei der Aufzeichnungsträger (1) einen optisch abtastbaren Bereich (2) mit örtlich vorbestimmten, zur Selektion oder Deselektion manuell markierbaren Stellen (3) aufweist, denen jeweils eine bestimmte Aufzeichnungsnummer (17) auf dem Aufzeichnungsträger (1) sichtbar zugeordnet ist, und wobei eine Leseeinrichtung (601, 41) für die Abtastung des abtastbaren Bereichs (2) und eine Datenverarbeitungsschaltung (Z-80) für die Auswertung der abgetasteten Werte des Bereichs (2) vorgesehen sind, **dadurch gekennzeichnet,** daß der optisch abtastbare Bereich nur eine aus einem einzigen Kreisbogen oder Spiralbogen bestehende Teilfläche einer Seite des Aufzeichnungsträgers einnimmt, wobei in Tabellenform eine Aufzeichnungsnummer jeweils einer markierbaren Stelle der Teilfläche zugeordnet ist, daß die Abtastung der Teilfläche während der Rotation des Aufzeichnungsträgers erfolgt, und daß der abtastbare Bereich an vorbestimmter Stelle zusätzlich eine Synchronisationsmarkierung (5, 6, 8a) zur Steuerung der Datenverarbeitungsschaltung (7-80) und der Leseeinrichtung (601, 41) aufweist.

2. Aufzeichnungsträger (1) für ein System nach Anspruch 1, wobei der Aufzeichnungsträger (1) einen optisch abtastbaren Bereich (2) mit örtlich vorbestimmten, zur Selektion oder Deselektion manuell markierbaren Stellen (3) aufweist, wobei jeweils eine bestimmte Aufzeichnungsnummer (17) auf dem Aufzeichnungsträger einer markierbaren Stelle in Tabellenform sichtbar zugeordnet ist, und wobei der abtastbare Bereich ferner an vorbestimmter Stelle eine Synchronisationsmarkierung (5, 6, 8a) aufweist und der optisch abtastbare Bereich (2) nur eine aus einem einzigen Kreisbogen oder Spiralbogen bestehende Teilfläche einer Seite des Aufzeichnungsträgers überdeckt.

3. System nach Anspruch 1 oder Aufzeichnungsträger nach Anspruch 2, **dadurch gekennzeichnet,** daß der Aufzeichnungsträger ein optisch abtastbarer Aufzeichnungsträger ist, vorzugsweise eine Compact-Disc (CD) oder Magneto-Optische-Disc (MOD) oder eine Photo-Disc, der eine Labelseite und eine Abtastseite aufweist, wobei der optisch abtastbare Bereich (2) auf der Labelseite des Aufzeichnungsträgers angeordnet ist und jeder Aufzeichnung eine Sprungadresse auf dem Aufzeichnungsträger zugeordnet ist.

4. System oder Aufzeichnungsträger nach Anspruch 3, **dadurch gekennzeichnet**, daß der Bereich (2) vorzugsweise am Rand des kreisförmigen Aufzeichnungsträgers (1) angeordnet ist (Fig. la) und daß die manuell markierbaren Stellen (3) des optisch abtastbaren Bereichs (2) in etwa gleich groß sind.

5. System oder Aufzeichnungsträger nach einem der vorhergehenden Ansprüche, **dadurch gekennzeichnet**, daß die Markierungen an den vorbestimmten Stellen löschbar sind.

6. Etikett (4, 52) oder Aufkleber zur Einbindung eines bereichsfreien, rotierenden Aufzeichnungsträgers mit einer Labelseite, z.B. Compact-Disc (CD) oder Magneto-Optische-Disc (MOD), in das System nach Anspruch 1, wobei das Etikett auf der Labelseite des Aufzeichnungsträgers (1) befestigbar ist und einen abtastbaren, aus einem einzigen Kreisbogen oder Spiralbogen bestehenden Bereich (2) mit örtlich vorbestimmten, zur Selektion oder Deselektion manuell markierbaren Stellen (3) aufweist, denen jeweils eine bestimmte Aufzeichnungsnummer (17) auf dem Aufzeichnungsträger in Tabellenform sichtbar zugeordnet ist und der abtastbare Bereich (2) eine Synchronisationsmarkierung (5, 6, 8a) aufweist.

7. Verfahren zur Steuerung einer Wiedergabevorrichtung (18) mit einer Aufnahmevorrichtung (19) für einen plattenförmigen Aufzeichnungsträger (1) nach einem der Ansprüche 2 - 5, **gekennzeichnet durch:**
- nach Einlegen oder Auflegen des Aufzeichnungsträgers (1) in die Aufnahmevorrichtung (19) der Wiedergabevorrichtung (18) wird eine in der Wiedergabevorrichtung (18) angeordnete Leseeinrichtung (601, 41) mittels der Synchronisationsmarkierung (5, 6, 8a) synchronisiert und anschließend der Bereich (2) der manuell markierbaren Stellen abgetastet;
- die markierten und/oder unmarkierten Stellen (3) des Bereichs (2) werden detektiert und die detektierten Werte in einer in der Wiedergabevorrichtung vorgesehenen Datenverarbeitungsschaltung (Z-80) ausgewertet und gespeichert;
- die den markierten oder unmarkierten Stellen (3) zugeordneten Aufzeichnungen (17) werden unter Kontrolle der Datenverarbeitungsschaltung (Z-80) wiedergegeben.

8. Verfahren nach Anspruch 7, **dadurch gekennzeichnet,** daß der Bereich (2) beim Rotieren des Aufzeichnungsträgers (1) abgetastet wird und daß der Aufzeichnungsträger (1) während des Abtastvorgangs des Bereichs (2) eine in etwa gleichbleibende Rotationsgeschwindigkeit aufweist.

9. Verfahren nach Anspruch 7 oder 8, **dadurch gekennzeichnet**, daß bei einer CD oder MOD der Bereich (2) abgetastet wird, während eine weitere Leseeinrichtung (41) in der Wiedergabevorrichtung ein festes, unveränderliches Datenverzeichnis (Table Of Content (TOC)) und/oder veränderliches Inhaltsverzeichnis (User-Table-Of Content (UTOC)) von der Abtastseite des Aufzeichnungsträgers (1) abgetastet und dabei unter anderem die Titelanzahl und Spieldauer des Aufzeichnungsträgers feststellt.

10. Verfahren nach einem der Ansprüche 7 - 9 zum Steuern einer als automatischen Wechslervorrichtung ausgebildeten Wiedergabevorrichtung (18) mit einem Steuersystem, daß das sukzessive und/oder selektive Abspielen einer Anzahl n von Aufzeichnungsträgern (1) ermöglicht wird, unter Verwendung eines Aufzeichnungsträgers nach einem der Ansprüche 2 - 5 und unter Verwendung einer Leseeinrichtung (601) in der Wiedergabevorrichtung, die die örtliche Lage der manuell markierbaren, örtlich vorbestimmten Stellen (3) liest und in einen Speicher (61, 16) in der Wechslervorrichtung einliest, **gekennzeichnet durch:**
- das Abspielen eines ersten Aufzeichnungsträgers (1) wird gestartet und der jeweils einer markierten oder unmarkierten Stelle (3) zugeordnete Aufzeichnungsbeitrag (17) wird abgespielt;
- der erste Aufzeichnungsträger wird gegen einen zweiten Aufzeichnungsträger ausgewechselt, wenn die den markierten oder unmarkierten Stellen zugeordneten Aufzeichnungsbeiträge von dem ersten Aufzeichnungsträger abgespielt sind;
- die Verfahrensschritte des Startens und Wechsels werden wiederholt, bis alle n oder eine Auswahl n - m von Aufzeichnungsträgern abgespielt wurde.

11. Verfahren nach einem der Ansprüche 7 - 10, **dadurch gekennzeichnet,** daß die Zeitdauer der Wiedergabe einer Aufzeichnung, z.B. eines stehenden Bildes in einer Anzeigeeinrichtung, automatisch oder mittels einer Bedienungseinrichtung, z.B. in Form einer Fernbedienung, gesteuert wird.

12. Wiedergabevorrichtung für ein System zur automatischen Selektion von Aufzeichnungen nach Anspruch 1, **dadurch gekennzeichnet,** daß die Wiedergabevorrichtung in der Lage ist, einen drehbaren, plattenförmigen Aufzeichnungsträger aufzunehmen, daß der Aufzeichnungsträger einen optisch abtastbaren Bereich (2) mit örtlich vorbestimmten, zur Selektion oder Deselektion bestimmten Stellen (3) aufweist, denen jeweils eine bestimmte Aufzeichnungsnummer (17) auf dem Aufzeichnungsträger zugeordnet ist, daß der abtastbare Bereich ferner an bestimmter Stelle eine Synchronisationsmarkierung (5, 6, 8a) aufweist, daß der optisch abtastbare Bereich (2) eine Teilfläche einer Seite des Aufzeichnungsträgers überdeckt, daß die Wiedergabevorrichtung einen Motor aufweist, mittels dem der Aufzeichnungsträger drehbar ist, daß die Wiedergabevorrichtung eine dem Bereich (2) zugeordnete Leseeinrichtung (601, 41) für die Abtastung des Bereichs (2), eine Datenverarbeitungsschaltung für die Auswertung eines von der Leseeinrichtung (601, 41) abgetasteten Wertes einer markierten und/oder unmarkierten Stelle (3) und einen Speicher (61, 16) zur Speicherung von abgetasteten Werten aufweist, daß die Leseeinrichtung durch die Synchronisationsmarkierung (5, 6, 8a) des Aufzeichnungsträgers steuerbar ist, und daß die Abtastung der markierten Stellen erst dann beginnt, wenn sich der Aufzeichnungsträger mit einer konstanten Geschwindigkeit dreht.

13. Wiedergabevorrichtung nach Anspruch 1, **dadurch gekennzeichnet**, daß die Wiedergabevorrichtung ein CD-Spieler oder ein MOD-Gerät oder Foto-CD-Spieler ist, der/das einen optischen Abtaster (41) zur Abtastung der Audio- und/oder Videoinformationen von der Abtastseite des Aufzeichnungsträgers (1) aufweist und bei dem die Leseeinrichtung (601, 41) zur Abtastung des abtastbaren Bereichs (2) auf der der Labelseite des in der Wiedergabevorrichtung angeordneten Aufzeichnungsträgers (1) zugewandten Seite angeordnet ist.

14. Wiedergabevorrichtung nach Anspruch 12 oder 13, **dadurch gekennzeichnet,** daß die Leseeinrichtung (601, 41) zur Abtastung des Bereichs (2) als Belegleser ausgebildet ist, der in der Lage ist, alphanumerische Zeichen zu detektieren und deren Werte zu verarbeiten.

15. Wiedergabevorrichtung nach einen der Ansprüche 12 - 14, **dadurch gekennzeichnet,** daß mittels der Art und Weise der Markierung der manuell markierbaren Stellen (3) des optisch abtastbaren Bereichs (2) eine gewünschte Steuerung von Wiedergabeparametern, wie z.B. Lautstärke, Klang, Dynamik usw. eines Aufzeichnungsbeitrags erfolgt.

## Claims

1. A system for the automatic selection of recordings from a plurality of recordings (17) stored on a rotatable disc-like recording medium (1) for the purpose of reproduction, wherein the recording medium (1) has an optically scannable area (2) having spatially predetermined, manually markable places (3) for the selection or de-selection, with which places, a respective, specific recorded number (17) on the recording medium (1) is visibly associated, and wherein there are provided a reading device (601, 41) for the scanning of the scannable area (2) and a data processing circuit (Z-80) for the evaluation of the scanned values of the area (2), characterised in that the optically scannable area takes up only a part area, consisting of a single circular arc or spiral arc, of one side of the recording medium, wherein in tabular form a recorded number is respectively associated with a markable place of the part area, in that the scanning of the part area takes place during the rotation of the recording medium, and in that the scannable area additionally has a synchronisation marking (5, 6, 8a) with predetermined location for the control of the data processing circuit (Z-80) and the reading device (601, 41).

2. A recording medium (I) for a system according to claim 1, wherein the recording medium (1) has an optically scannable area (2) having spatially predetermined, manually markable places (3) for the selection or de-selection, wherein a specific recorded number (17) on the recording medium is visibly associated in tabular form with each markable place, and wherein furthermore the scannable area has a synchronization marking (5, 6, 8a) with predetermined location and the optically scannable area (2) only covers a part area, consisting of a single circular arc or spiral arc, of one side of the recording medium.

3. A system according to claim 1 or a recording medium according to claim 2, characterised in that the recording medium is an optically scannable recording medium, preferably a compact disc (CD) or magneto-optic disc (MOD) or a photo disc, which has a label side and a scanning side, wherein the optically scannable area (2) is arranged on the label side of the recording medium and a "jump to" address on the recording medium is allocated to each recording.

4. A system or recording medium according to claim 3, characterised in that the area (2) is preferably arranged at the edge of the circular recording medium (1) (Fig. 1a) and that the manually markable places (3) of the optically scannable area (2) have approximately the same size.

5. A system or recording medium according to any of the preceding claims, characterised in that the markings at the predetermined places are erasable.

6. A label (4, 52) or sticker for integrating into the system according to claim 1 a rotating recording medium having a label side but no areas e.g. a compact disc (CD) or magneto-optic disc (MOD), wherein the label can be affixed on the label side of the recording medium (1) and comprises a scannable area (2) consisting of a single circular arc or spiral arc and having spatially predetermined, manually markable places (3) for the selection or de-selection, with which places a respective, specific recorded number (17) on the recording medium is visibly associated in tabular form, and the scannable area (2) has a synchronization marking (5, 6, 8a).

7. A method for controlling a reproduction device (18) having a receiving device (19) for a disc-like recording medium (1) according to any of the claims 2 - 5, characterised by:
- following insertion or placing of the recording medium (1) into the receiving device (19) of the reproduction device (18), a reading device (601, 41) arranged in the reproduction device (18) is synchronized by means of the synchronization marking (5, 6, 8a) and thereafter the area (2) of the manually markable places is scanned;
- the marked and/or unmarked places (3) of the area (2) are detected and the detected values are evaluated and stored in a data processing circuit (Z-80) provided in the reproduction device;
- the recordings (17) associated with the marked and/or unmarked places (3) are reproduced under the control of the data processing circuit (Z-80).

8. A method according to claim 7, characterised in that the area (2) is scanned during rotation of the recording medium (1) and that the recording medium (1) has an approximately constant rotational speed during the scanning process of the area (2).

9. A method according to claim 7 or 8, characterised in that with a CD or MOD, the area (2) is scanned whilst a further reading device (41) in the reproduction device scans a fixed, unchangeable data list (Table of Content (TOC)) and/or changeable contents list (User Table of Content (UTOC)) from the scanning side of the recording medium (1) and thereby determines, *inter alia,* the number of tracks and the playing time of the recording medium.

10. A method according to any of claims 7 - 9 for the control of a reproduction device (18) constructed as an automatic changing device including a control system, that the successive and/or selective playback of a number n of recording media (1) is made possible by using a recording medium according to any of the claims 2 - 5 and by using a reading device (601) in the reproduction device which reads the spatial position of the manually markable, spatially predetermined places (3) and reads them into a store (61. 16) in the changing device, characterised by:
- the playback of a first recording medium (1) is started and the recorded items (17) associated with a respective marked or unmarked place (3) is played back;
- the first recording medium is exchanged for a second recording medium when the recorded items associated with the marked or unmarked places of the first recording medium have been played back;
- the method steps of starting and changing are repeated until all n or a selection n - m of recording media have been played.

11. A method according to any of claims 7 - 10, characterised in that the duration of the reproduction of a recording e.g. of a still picture in a display device, is controlled automatically or by means of an operating device e.g. in the form of a remote control.

12. A reproduction device for a system for the automatic selection of recordings according to claim 1, characterised in that the reproduction device is able to accept a rotatable disc-like recording medium, that the recording medium has an optically scannable area (2) having spatially predetermined places (3) intended for the selection or de-selection with which a respective specific recorded number (17) on the recording medium is associated, that the scannable area additionally has a synchronization marking (5, 6, 8a) with predetermined location, that the optically scannable area (2) covers a part area of one side of the recording medium, that the reproduction device has a motor by means of which the recording medium is rotatable, that the reproduction device has a reading device (601, 41) associated with the area (2) for the scanning of the area (2), a data processing circuit for the evaluation of a value of a marked and/or unmarked place (3) scanned by the reading device (601, 41) and a store (61, 16) for storing the scanned values, that the reading device is controllable by the synchronization marking (5, 6, 8a) of the recording medium, and that the scanning of the marked places only begins when the recording medium is rotating at a constant speed.

13. A reproduction device according to claim 1, characterised in that the reproduction device is a CD player or a MOD apparatus or a Photo-CD player which has an optical scanner (41) for scanning the audio and/or video information from the scanning side of the recording medium (1) and in which the reading device (601, 41) for scanning the scannable area (2) is arranged on the side facing the label side of the recording medium (I) arranged in the reproduction device.

14. A reproduction device according to claim 12 or 13, characterised in that the recording device (601, 41) for scanning the area (2) is constructed as a document reader which is capable of detecting alphanumeric characters and of processing their values.

15. A reproduction device according to any of claims 12 - 14, characterised in that a desired control of reproduction parameters such as e.g. volume, tone, dynamic range etc of a recorded item is effected by means of the type and manner of marking the manually markable places (3) of the optically scannable area (2).

## Revendications

1. Système pour la sélection automatique d'enregistrements individuels parmi une multitude d'enregistrements (17) stockés sur un support d'enregistrement rotatif en forme de disque (1), dans le but de les reproduire, où ledit support d'enregistrement (1) comporte un secteur (2) à lecture optique qui comprend des cases (3) localisées de façon prédéfinie et pouvant recevoir des marquages manuels pour la sélection ou désélection, dont chacune porte le numéro visible d'un enregistrement défini (17) stocké sur ledit support d'enregistrement (1), système comportant en outre un système de lecture (601, 41) pour le balayage du secteur à lecture optique (2) et un circuit de traitement de données (Z-80) pour l'analyse des valeurs détectées à partir dudit secteur (2), **caractérisé en ce** que ledit secteur à lecture optique n'occupe qu'une surface partielle épousant la forme d'un arc de cercle ou d'un tronçon de spirale, sur l'une des faces dudit support d'enregistrement, sachant qu'un numéro d'enregistrement est attribué, sous forme de tableau, à chacune des cases de marquage de ladite surface partielle, système caractérisé également en ce que le balayage de ladite surface partielle est effectué pendant la rotation du support d'enregistrement et que ledit secteur à lecture optique comprend en outre, à une position prédéfinie, un marquage de synchronisation (5, 6, 8a) pour assurer la commande du circuit de traitement de données (Z-80) et du système de lecture (601, 41).

2. Support d'enregistrement (1) pour un système selon la revendication 1, sachant que ledit support d'enregistrement (1) comporte un secteur (2) à lecture optique qui comprend des cases (3) localisées de façon prédéfinie et pouvant recevoir des marquages manuels pour la sélection ou la désélection, sachant en outre que le numéro d'un enregistrement défini (17) stocké sur ledit support d'enregistrement est attribué de façon visible et sous forme de tableau, à chacune desdites cases (3), et sachant en outre que ledit secteur à lecture optique comprend, à une position définie, un marquage de synchronisation (5, 6, 8a), et que ledit secteur à lecture optique (2) ne recouvre qu'une surface partielle épousant la forme d'un arc de cercle ou d'un tronçon de spirale, sur l'une des faces dudit support d'enregistrement.

3. Support d'enregistrement selon l'une quelconque des revendications 1 ou 2, **caractérisé en ce** que ledit support d'enregistrement est un support d'enregistrement à balayage optique, de préférence un disque compact (CD), un disque magnéto-optique (MOD) ou un photo-disque, qui présente une face label et un face enregistrement, sachant que le secteur à lecture optique (2) est disposé sur la face label dudit support d'enregistrement et qu'une adresse de saut est attribuée à chacun des enregistrements sur ledit support d'enregistrement.

4. Support d'enregistrement selon la revendication 3, **caractérisé en ce** que ledit secteur (2) est placé, de préférence, au bord du support d'enregistrement circulaire (1) (fig. 1a) et que les cases (3) recevant les marquages manuels dudit secteur à lecture optique (2) sont sensiblement de la même taille.

5. Support d'enregistrement selon l'une quelconque des revendications précédentes, **caractérisé en ce** que les marquages des positions prédéfinies peuvent être effacés.

6. Etiquette (4, 52) ou auto-collant pour adapter au système selon la revendication 1, un support d'enregistrement rotatif comportant une face label exempte dudit secteur de marquage, tel un disque compact (CD) ou un disque magnéto-optique (MOD), sachant que ladite étiquette peut être fixée sur la face label dudit support d'enregistrement (1) et qu'elle comporte un secteur à lecture optique (2) épousant la forme d'un arc de cercle ou tronçon de spirale et comprenant des cases (3) localisées de façon prédéfinie et pouvant recevoir des marquages manuels pour la sélection ou la désélection, sachant que le numéro d'un enregistrement défini (17) stocké sur ledit support d'enregistrement est attribué de façon visible et sous forme de tableau, à chacune desdites cases (3), et sachant également que ledit secteur à lecture optique (2) possède un marquage de synchronisation (5, 6, 8a).

7. Procédé pour la commande d'un appareil de reproduction (18) comportant un dispositif de réception (19) pour un support d'enregistrement en forme de disque (1) selon l'une quelconque des revendications 2 à 5, **caractérisé en ce qui suit:**
- après l'introduction ou la mise en place dudit support d'enregistrement (1) dans le dispositif de réception (19) de l'appareil de reproduction (18), un système de lecture (601, 41) prévu dans ledit appareil de reproduction (18) est synchronisé au moyen d'un marquage de synchronisation (5, 6, 8a), puis ledit secteur (2) des cases à marquage manuel est balayé ;
- les cases (3) marquées et/ou non marquées dudit secteur (2) sont détectées, puis les valeurs relevées sont analysées et mémorisées dans un circuit de traitement de données (Z-80) prévu dans ledit appareil de reproduction ;
- les enregistrements (17) correspondant aux cases (3) marquées ou non marquées sont reproduits sous le contrôle dudit circuit de traitement de données (Z-80).

8. Procédé selon la revendication 7 **caractérisé en ce** que ledit secteur (2) est balayé pendant la rotation du support d'enregistrement (1), et que ledit support d'enregistrement (1) tourne à une vitesse quasi constante lors du processus de balayage du secteur (2).

9. Procédé selon l'une quelconque des revendications 7 ou 8 **caractérisé en ce** que, sur un CD ou un MOD, ledit secteur (2) est balayé tandis qu'un second système de lecture (41) prévu dans l'appareil de reproduction lit un répertoire défini et invariable (Table of Contents / TOC) et/ou un répertoire variable (User Table of Contents / UTOC) sur la face enregistrée dudit support d'enregistrement (1), déterminant à cette occasion, entre autres, le nombre de titres et la durée du support d'enregistrement.

10. Procédé selon l'une quelconques des revendication 7 à 9 pour commander un appareil de reproduction (18) conçu sous la forme d'un changeur automatique et comprenant un système de commande qui permet la lecture successive et/ou sélective d'un nombre n de supports d'enregistrement (1), en utilisant un support d'enregistrement selon l'une quelconque des revendications 2 à 5, et en utilisant également un système de lecture (601) incorporé dans ledit appareil de reproduction, qui détecte les positions des cases (3) localisées de façon prédéfinie et recevant des marquages manuels, pour les entrer dans une mémoire (61, 16) dudit changeur, **caractérisé en ce qui suit :**
- la lecture d'un premier support d'enregistrement (1) est lancée, puis chacun des enregistrements (17) correspondant à une case (3) marquée ou non marquée est reproduit ;
- le premier support d'enregistrement est remplacé par un second support d'enregistrement dès que les enregistrements correspondant aux cases marquées ou non marquées du premier support d'enregistrement ont tous été reproduits ;
- la séquence de démarrage et de changement se répète autant de fois que nécessaire pour lire le nombre total n ou une sélection n - m de supports d'enregistrement.

11. Procédé selon l'une quelconque des revendications 7 à 10 **caractérisé en ce** que la durée de reproduction d'un enregistrement, p.ex. d'une image fixe sur un dispositif de reproduction, est réglée automatiquement ou au moyen d'un appareil de commande, tel qu'une télécommande.

12. Appareil de reproduction pour un système de sélection automatique des enregistrements selon la revendication 1, **caractérisé en ce** que ledit appareil de reproduction peut recevoir un support d'enregistrement rotatif en forme de disque, que ledit support d'enregistrement comporte un secteur à lecture optique (2) comprenant des cases (3) de localisation prédéfinie pour la sélection ou la désélection, sachant que le numéro d'un enregistrement défini (17) stocké sur le support d'enregistrement, est attribué à chacune desdites cases, caractérisé en outre en ce que ledit secteur à lecture optique possède un marquage de synchronisation (5, 6, 8a) en un endroit défini, que ledit secteur à lecture optique (2) recouvre une surface partielle sur l'une des faces dudit support d'enregistrement, caractérisé également en ce que ledit appareil de reproduction comporte un moteur permettant de faire tourner ledit support d'enregistrement, que ledit appareil de reproduction comporte un système de lecture (601, 41) affecté audit secteur (2) et prévu pour le balayage de celui-ci, ainsi qu'un circuit de traitement de données pour analyser la valeur d'une case (3) marquée ou non marquée détectée par le système de lecture (601, 41), et enfin une mémoire (61, 16) permettant de stocker les valeurs détectées, caractérisé par ailleurs en ce que ledit système de lecture peut être commandé grâce au marquage de synchronisation (5, 6, 8a) dudit support d'enregistrement, et que le balayage des cases marquées ne débute que lorsque le support d'enregistrement tourne à une vitesse constante.

13. Appareil de reproduction selon la revendication 1 **caractérisé en ce** que ledit appareil de reproduction est un lecteur de CD ou un magnétoscope (pour MOD) ou un lecteur de photo-CD qui comporte un système de lecture (41) optique pour lire les informations audio et/ou vidéo par balayage de la face enregistrée dudit support d'enregistrement (1), et dont le système de lecture (601, 41) prévu pour balayer ledit secteur (2) à lecture optique est disposé de telle manière qu'il soit orienté vers la face label dudit support d'enregistrement (1) placé dans ledit appareil de reproduction.

14. Appareil de reproduction selon l'une quelconque des revendications 12 ou 13 **caractérisé en ce** que ledit système de lecture (601, 41) servant à balayer ledit secteur (2) se présente sous la forme d'un lecteur de caractères qui est capable de détecter des caractères alphanumériques et de traiter les valeurs qu'ils représentent.

15. Appareil de reproduction selon l'une quelconque des revendications 12 à 14 **caractérisé en ce** que la forme et le mode de marquage des cases (3) à marquage manuel constituant ledit secteur à lecture optique (2) permettent d'obtenir le réglage souhaité de certains paramètres de reproduction, tels que le volume sonore, la tonalité, la dynamique, etc., d'un enregistrement.
